# NEW EUROPEAN PATENT SPECIFICATION

(11) **EP 0 212 133 B2**
(45) Date of publication and mention of the opposition decision: **22.09.1999**
(45) Mention of the grant of the patent: 18.04.1990
(21) Application number: 86108521.5
(22) Date of filing: 23.06.1986
(51) Int. Cl.: D01F 6/04, D01D 1/02, C08J 3/11, C08J 5/18, B29D 7/00, B29K 23/00

(54) **Method to prepare high strength ultrahigh molecular weight polyolefin articles by dissolving particles and shaping the solution**
Verfahren zur Herstellung von Gegenständen mit hoher Festigkeit aus Polyolefinen mit sehr hohem Molekulargewicht durch Auflösen von Teilchen und Umformung der Lösung
Méthode de préparation d'articles en polyoléfine à haute ténacité de poids moléculaire extrêmement élevé, par dissolution de particules et mise en forme de la solution obtenue

(30) Priority: 19.08.1985 US 766727
(43) Date of publication of application: 04.03.1987
(73) Proprietor: AlliedSignal Inc., Morristown, New Jersey 07962-2245 (US)
(72) Inventor: Weedon, Gene Clyde, Morristown New Jersey 07960 (US); Tam, Thomas Yiu-Tai, Morristown New Jersey 07960 (US); Sun, Jim Chang-Jen, Morristown New Jersey 07960 (US)
(74) Representative: Lawrence, Peter Robin Broughton

(56) References cited:
- EP-A- 0 064 167
- EP-A- 0 115 192
- EP-A- 0 135 253
- EP-A- 0 139 141
- US-A- 4 076 681
- G.B. McKenna, J.M. Crissmann and F. Khoury, Technical Papers SPE, Vol. XXVII, (1981), pp. 82 - 84
- Modern Business Statistics, Freund & Williams, Prentice-Hall Inc, 1956, pp. 145 - 149

## Description

### Background of the Invention

This invention relates to a method to prepare high strength ultrahigh molecular weight polyolefin articles by dissolving particles and shaping the solution. The article can be stretched to increase strength.

This invention is an improvement of the process disclosed in U.S. 4 413 110, and useful in any other process using ultrahigh molecular weight polyolefin starting material. Disclosure of a similar apparatus and method to dissolve lower molecular weight polyolefin particles prior to flash spinning plexifilamentary material is found in U.S. 3 227 794; see particularly examples V to VII.

By reason of the ultrahigh molecular weight of the olefin polymers employed in these processes and other processes using this starting material, such polymer solutions have very high viscosities at low concentrations of the olefin polymer. The high viscosity of such polymer solutions makes it difficult to provide adequate stirring to assist in dissolving all of the olefin polymer. It is essential to uniformly dissolve all of the olefin polymer in the hydrocarbon solution, as it has been observed that the presence of even minute quantities of undissolved olefin polymer or nonuniformly concentrated portions in the polymer solution has an adverse effect upon the quality of the ultimate shaped articles, such as fibers, films or tapes prepared therefrom.

To facilitate the preparation of hydrocarbon solutions of such olefin polymers, it has been proposed to ameliorate the problem of dissolving the polymer by using very small particles to accelerate its rate of dissolution in the liquid hydrocarbon. Notwithstanding this technique, difficulties in dissolving all of the polymer particles, or ensuring uniform solution properties throughout, are still presented. It is believed that the difficulty results from the fact that the fine polymer particles imbibe hydrocarbon at their surface and swell to a volume substantially larger than the original size of the polymer particles. The surface of such swollen polymer particles tends to be quite tacky and, when such swollen polymer particles contact each other, they tend to fuse together and form agglomerates of the swollen polymer particles. Apparently the rate of diffusion of the liquid hydrocarbon into such agglomerates is slow. When "particles" are discussed herein what is meant is the basic dry (solvent-free) small particle of polymer, not the agglomerates, and not gels or swollen particles.

### Summary of the Invention

This invention provides a method which not only dissolves ultrahigh molecular weight olefin polymer in liquid hydrocarbon at relatively high rates, but also completely dissolves all of the olefin polymer so that the solution obtained therefrom is substantially uniform in properties throughout and free of undissolved polymer particles.

This invention is a method to prepare high strength, high modulus polyethylene shaped articles comprising forming a heated solution of said polyethylene from particles of which about 75 to about 100 percent by weight have a particle size of from about 100 to about 400 microns, at least 40% of the particles being retained on a No. 80 mesh screen (0.177 mm), said polyethylene having a weight average molecular weight of from about 300 000 to 7 000 000, and an intrinsic viscosity above 15 and up to 19, then extruding the heated solution, then cooling and stretching said extruded solution. The cooling can be either after removal of the solvent from the extruded solution or during or before removal of the solvent from the solution. The particle size can be further characterized as being between evenly distributed and distributed in a bell-shaped curve of particle sizes centered at about 125 to 200 microns. Preferably, about 85 to 100% of the particles have a particle size between about 120 and 350 microns. Also preferably the molecular weight is between about 700 000 and 5 000 000. The preferable polyethylene has a molecular weight from about 700 000 to about 5 000 000. The preferred article is a fiber, but it could be a fiber, film, tape or other such extrudable article. The intrinsic viscosity of the polyethylene can be further characterized in that during continuous processing of the polyethylene to form the heated solution, particles have an intrinsic viscosity which varies within one intrinsic viscosity of the intended viscosity, at all times. It is preferred that 80% of the particle size distribution is within one standard deviation of the mean particle size in microns. The preferred solvent is a hydrocarbon having a boiling point over 100°C. It is preferred that the solvent be selected from the group consisting of halogenatated hydrocarbon, mineral oil, decalin, tetralin, naphthalene, xylene, toluene, dodecane, undecane, decane, nonane, octene, and low molecular weight polyethylene wax. Preferably the solution consists of about 1% to 35%, preferably 2 to 20%, polyolefin by weight. It is also preferred to stretch the shaped solution in further processing. The stretching can be before or after removal of a solvent or both. The shaped article is preferred to have been stretched to a length at least five times its original length.

Various known additives to improve solution, polymer or fiber properties can be added; for example, antioxidants, viscosity modifiers, ultraviolet light stabilizers, fillers, delusterants and the like can added to the polymer particles or solution.

### Description of the Preferred Embodiments of the Invention

### Example 1

Ultrahigh molecular weight (weight average) polyethylene polymers having the intrinsic viscosity (I.V.) and particle size distribution set forth in Table I were processed into high strength fiber. Lots 1 - 9 are for reference only, and hot II is for purposes of comparison with the present invention.

**TABLE I**

| PARTICLE SIZE DISTRIBUTION OF POLYMER LOTS | | | | | | | | |
|---|---|---|---|---|---|---|---|---|
| Lot No. | I.V. | I.V. (Retest) | Percent Retained on Sieve | | | | | |
| | | | #40 | #60 | #80 | #100 | #200 | Pan |
| 1 | 26 | 26 | 0.2 | 12.5 | 46.3 | 22.9 | 18.1 | 0 |
| 2 | 27 | 29 | 0 | 15.6 | 67.7 | 12.5 | 4.0 | 0.2 |
| 3 | 26 | 24 | 0 | 6.3 | 35.7 | 35.3 | 22.4 | 0.2 |
| 4 | 23 | 24 | 0 | 6.5 | 20.0 | 16.2 | 55.9 | 1.4 |
| 5 | 21 | 23 | 0.2 | 0.4 | 56.7 | 32.8 | 8.4 | 1.4 |
| 6 | 25 | 23 | 0 | 1.0 | 56.5 | 39.1 | 3.4 | 0.6 |
| 7 | 28 | 24 | 0 | 0.6 | 46.5 | 49.3 | 3.2 | 0.4 |
| 8 | 30 | 32 | 0 | 0.2 | 58.2 | 36.4 | 4.4 | 0.8 |
| 9 | 25 | 26 | 0 | 18.0 | 52.1 | 19.5 | 10.0 | 0.4 |
| 10 | 17 | -- | 0 | 3.0 | 38.0 | 35.6 | 23.1 | 0.4 |
| 11 | 18 | 18 | 0.6 | 2.0 | 5.0 | 7.2 | 79.6 | 5.7 |

A number 40 screen sieve has openings of about 420 microns; similarly a number 60, about 250 microns; number 80, 177 microns; number 100, 149 microns; and number 200 has openings of about 74 microns. Those particles which drop through to the pan would have a polymer particle size of less than 74 microns. The sieve screening test is carried out in the conventional manner using the method given in W.S. Testing Sieve Handbook No. 53 (1982) on pages 14-15 by Tyler Company of Mentor, Ohio, by vibrating the series of screens with each next larger opening screen just above the next smaller opening screen. A small amount of conductive carbon black or small (~⅝") stainless steel balls can be added to minimize agglomeration during the testing.

Part of each lot of polymer particles was dissolved in mineral oil to obtain a six percent by weight solution by the following method using apparatus similar to that disclosed in Examples V ot VII of U.S. Patent 3 227 794 with simplications as described below.

21 Kg/hr of mineral oil and 1.4 kg per hour of particles from a lot of the polymer particles of Table I were fed to a stirred kettle heated to 2-40°C. The residence time in the kettle was about two hours to form a slurry. The slurry was then pumped at a rate of 22.4 kg/hr through 12.5 m of a coiled heated tube having an internal diameter of 7 mm and heated to 250°C with an outlet pressure of 800 psig, then through 17 m of a tube having an internal diameter of 1.7 cm, heated to 255°C, and then pumped directly to the spinnerette described in U.S. 4 413 100. Spinning temperature was 255°C. Different diameter and length (residence time) tubing may be used for different viscosity (molecular weight) polymers and for different particle sizes or particle size distributions. Yarn (fiber) preparation was as follows:

A 118 filament polyethylene yarn was prepared by the method described in U.S. 4 413 110 and Example 1 except stretching of the solvent extracted, dry yarn was done in-line by a multiple stage drawing unit have five conventional large Godet draw rolls with an initial finish applicator roll and a take-up winder which operates at 20 to 500 m/m, typically in the middle of this range. However, this rate is a balance of product properties against speed and economics. At lower speeds better yarn properties are achieved, but at higher speeds the cost of the yarn is reduced in lieu of better properties with present know-how.

After the partially oriented yarn containing mineral oil is extracted by trichlorotrifluoroethane (TCTFE) in a washer, it is taken up by a dryer roll to evaporate the solvent. The "dry partially oriented yarn" is then drawn by a multiple stage drawing unit. The following is a detailed example of the drawing process.

Yarn from the washer containing about 70% by weight TCTFE is taken up by the first dryer roll at constant speed to ensure denier control and to provide first stage drying to about 5% of TCTFE. Drawing between dryer rolls at a temperature of about 90 to 120°C is at 1.05 to 1.8 draw ratio with a tension generally at 3000 to 5000 grams.

A typical coconut oil type finish is applied to the yarn, now containing about 1% by weight TCTFE, as it leaves the second dryer roll, for static control and optimal processing performance. The draw ratio between the second dryer roll at about 60°C and the first draw roll is kept at a minimum (1.10-1.2 D.R.) because of the cooling effect of the finish. Tension at this stage is generally 4500 to 6500 grams.

From the first draw roll to the last draw roll maximum draw at each stage is applied. Yarn is drawn between the first draw roll and the second draw roll (D.R. 1.5 to 2.2) at 125 to 140°C with a tension of 5000 to 7000 grams. In the following stage (second roll and third roll), yarn is drawn at an elevated temperature (130° to 150°C; D.R. 1.2) with a tension generally of 7000 to 9000. Between the third roll and fourth or last roll, yarn is drawn at a preferred temperature lower than the previous stage (135 to 145°C) at a draw ratio of 1.15 with a tension generally of 7500 to 9500 grams. The drawn yarn is allowed to cool under tension on the last roll before it is wound onto the winder. The drawn yarn generally has a denier of about 1200, UE (ultimate elongation) about 3.7%, UTS (ultimate tensile strength) about 30 g/denier (~2.5 GPa) and tensile modulus about 1200 g/denier (~100 GPa).

During processing of the various lots of Table I, dramatic differences were found between lots. Lots 1, 2, 6, 7,9 and 10 processed into yarn having the above properties with no unusual problems. However, Lots 4 and 11 caused yarn (fiber) breakage upon drawing so often that the process could not operate. Also Lots 3 and 8 were only marginally operable because of individual filament breakage in the yarn (fiber) occurring at about four breaks an hour. Lot 5 was rated fair in break occurrences. Note that the unacceptable lots 4 and 11 had an unusually high percent of fine particles, both had well over half the particles small enough to pass through the No. 100 sieve, 149 micron screen opening. Conversely, these lots had a particle size distribution that did not test to retain over 40% by weight on the No. 80 sieve. Lot 11 only retained 7.6% and Lot 4 only 26.5%. Lot 8 is thought to have marginal performance due to the high intrinsic viscosity, 30 I.V., while Lot 3 has a marginal 42% by weight retained on No. 80 sieve test result. The performance of Lot 10 compared to Lot 3 may be explained by the I.V. difference, or by the fact that a nitrogen pressure blanket was used during processing of the lower I.V. particles.

## Claims

1. A method for preparing high strength, high modulus polyethylene shaped articles comprising
forming a heated solution of said polyethylene from particles of which 75 to 100% by weight have a particle size of from 100 to 400 microns, at least 40% of the particles being retained on a No. 80 mesh screen (0.177 mm), said polyethylene having a weight average molecular weight of from 300,000 to 7,000,000 and an intrinsic viscosity above 15 and up to 19, then
extruding said heated solution, then
cooling and stretching said extruded solution.

2. The method of claim 1 wherein said cooling is after removal of solvent from said extruded solution.

3. The method of claim 1 wherein said cooling is during removal of solvent from said extruded solution.

4. The method of claim 1 wherein said cooling is before removal of solvent from said extruded solution.

5. The method of claim 1 wherein the particle size is further characterised as being between evenly distributed and distributed in a bell-shaped curve of particle sizes centred at about 125 to 200 microns.

6. The method of claim 5 wherein about 85 to 100% of the particles have a particle size between 120 and 350 microns.

7. The method of claim 1 wherein the molecular weight is between about 700,000 and 5,000,000.

8. The method of claim 1 wherein the article is a fiber.

9. The method of claim 8 which is further characterised in that during continuous processing of the polyethylene to form said heated solution, said particles have an intrinsic viscosity which varies within one intrinsic viscosity of the intended viscosity, at all times.

10. The method of claim 1 wherein the article is fiber, film or tape.

11. The method of claim 1 wherein 95% of the particle size distribution is within plus or minus one standard deviation of the mean particle size in microns.

12. The method of claim 1 wherein the solvent is a hydrocarbon having a boiling point over 100°C.

13. The method of claim 12 wherein the solvent is selected from the group consisting of halogenated hydrocarbons, mineral oil, decalin, tetralin, naphthalene, xylene, toluene, dodecane, undecane, decane, nonane, octene, and low molecular weight polyethylene wax.

14. The method of claim 1 wherein the solution consists of about 1% to about 35% polyethylene by weight.

15. The method of claim 14 wherein the solution consists of from about 2 to about 20% by weight polyethylene.

16. The method of any preceding claim wherein said stretching is after removal of solvent from the shaped solution.

17. The method of any preceding claim wherein said stretching is before removal of solvent from the shaped solution.

18. The method of any preceding claim wherein the shaped solution is stretched both before and after removal of solvent from said shaped solution.

19. The method of any preceding claim wherein the shaped article has been stretched to a length at least five times its original length.

## Patentansprüche

1. Verfahren zum Herstellen von Polyethylenformgegenständen von hoher Festigkeit und hohem Modul durch Bilden einer erwärmten Lösung des Polyethylens aus Teilchen, von denen etwa 75 bis etwa 100 Gew.-% eine Teilchengrösse von etwa 100 bis etwa 400 µm haben, wobei mindestens 40 % der Teilchen von einem 80 mesh Gitter (0,177 mm) zurückgehalten werden, wobei das Polyethylen ein Gewichtsmittel des Molekulargewichts von etwa 300 000 bis 7 000 000, sowie eine spezifische Viscosität grösser als 15 und bis 19 aufweist, anschliessendem Formen der erwärmten Lösung, und anschliessendem Kühlen der Formlösung.

2. Verfahren nach Anspruch 1, worin das Kühlen nach Entfernen des Lösungsmittels aus der Formlösung erfolgt.

3. Verfahren nach Anspruch 1, worin das Kühlen während Entfernens des Lösungsmittels aus der Formlösung erfolgt.

4. Verfahren nach Anspruch 1, worin das Kühlen vor Entfernen des Lösungsmittels aus der Formlösung erfolgt.

5. Verfahren nach Anspruch 1, worin die Teilchengrösse eine Verteilung aufweist, die zwischen einer gleichmässigen Verteilung und einer Verteilung nach einer bei etwa 125 bis 200 µm zentrierten, glockenförmigen Kurve liegt.

6. Verfahren nach Anspruch 5, worin etwa 85 bis 100 % der Teilchen eine Teilchengrösse zwischen etwa 120 und 350 µm haben.

7. Verfahren nach Anspruch 1, worin das Molekulargewicht zwischen etwa 700 000 und 5 000 000 ist.

8. Verfahren nach Anspruch 1, worin der Gegenstand eine Faser ist.

9. Verfahren nach Anspruch 8, weiter dadurch gekennzeichnet, dass während einer kontinuierlichen Verarbeitung des Polyethylens, um die erwärmte Lösung zu bilden, die Teilchen eine spezifische Viskosität haben, welche sich innerhalb einer spezifischen Viskosität der beabsichtigten Viskosität zu jeder Zeit ändert.

10. Verfahren nach Anspruch 1, worin der Gegenstand eine Faser, ein Film oder ein Band ist.

11. Verfahren nach Anspruch 1, worin 95 % der Teilchengrössenverteilung innerhalb plus oder minus einer Standardabweichung der durchschnittlichen Teilchengrösse in µm ist.

12. Verfahren nach Anspruch 1, worin das Lösungsmittel ein Kohlenwasserstoff mit einem Siedepunkt über 100°C ist.

13. Verfahren nach Anspruch 12, worin das Lösungsmittel aus der Gruppe bestehend aus halogenierten Kohlenwasserstoffen, Mineralöl, Decalin, Tetralin, Naphthalin, Xylol, Toluol, Dodecan, Undecan, Decan, Nonan, Octen und niedermolekulargewichtigem Polyethylenwachs ausgewählt ist.

14. Verfahren nach Anspruch 1, worin die Lösung aus etwa 1 Gew.-% bis etwa 35 Gew.-% Polyethylen besteht.

15. Verfahren nach Anspruch 14, worin die Lösung aus etwa 2 bis etwa 20 Gew.-% Polyethylen besteht.

16. Verfahren nach einem der vorhergehenden Ansprüchen, worin das Strecken nach Entfernen des Lösungsmittels aus der Formlösung erfolgt.

17. Verfahren nach einem der vorhergehenden Ansprüchen, worin das Strecken vor Entfernen des Lösungsmittels aus der Formlösung erfolgt.

18. Verfahren nach einem der vorhergehenden Ansprüchen, worin die Formlösung sowohl vor als auch nach Entfernen des Lösungsmittels aus der Formlösung gestreckt wird.

19. Verfahren nach einem der vorhergehenden Ansprüchen, worin der Formgegenstand auf eine Länge von mindestens fünfmal seiner ursprünglichen Länge gestreckt worden ist.

## Revendications

1. Procédé pour préparer des articles formés en polyéthylène à haute résistance et à module élevé, comprenant les étapes consistant à :
former une solution chauffée dudit polyéthylène à partir de particules dont 75 % à 100 % en poids ont une granulométrie allant de 100 à 400 microns, au moins 40 % des particules étant retenues sur un tamis 80 mesh (0,177 mm), ledit polyéthylène ayant un poids moléculaire moyen en poids de 300 000 à 7 000 000 et une viscosité intrinsèque dépassant 15 et allant jusqu'à 19, puis à
extruder ladite solution chauffée, puis à
refroidir et étirer ladite solution extrudée.

2. Procédé selon la revendication 1, dans lequel ledit refroidissement se fait après extraction du solvant de ladite solution extrudée.

3. Procédé selon la revendication 1, dans lequel ledit refroidissement se fait durant l'extraction du solvant de ladite solution extrudée.

4. Procédé selon la revendication 1, dans lequel ledit refroidissement se fait avant l'extraction du solvant de ladite solution extrudée.

5. Procédé selon la revendication 1, dans lequel la répartition granulométrique est caractérisée par le fait qu'elle est intermédiaire entre une répartition régulière et une répartition en courbe de Gauss centrée sur environ 125 à 200 microns.

6. Procédé selon la revendication 5, dans lequel environ 85 % à 100 % des particules ont une granulométrie entre 120 et 350 microns.

7. Procédé selon la revendication 1, dans lequel le poids moléculaire est entre environ 700 000 et 5 000 000.

8. Procédé selon la revendication 1, dans lequel l'article est une fibre.

9. Procédé selon la revendication 8, caractérisé en outre par le fait que, durant le traitement en continu du polyéthylène pour former ladite solution chauffée, lesdites particules ont une viscosité intrinsèque qui varie toujours dans une plage de viscosités intrinsèques par rapport à la viscosité cible.

10. Procédé selon la revendication 1, dans lequel l'article est une fibre, un film ou un ruban.

11. Procédé selon la revendication 1, dans lequel 95 % des particules se situent à moins d'un écart-type de la granulométrie moyenne, en microns.

12. Procédé selon la revendication 1, dans lequel le solvant est un hydrocarbure ayant un point d'ébullition au-dessus de 100 °C.

13. Procédé selon la revendication 12, dans lequel le solvant est choisi dans le groupe constitué par les hydrocarbures halogénés, les huiles minérales, la décaline la tétraline, le naphtalène, le xylène, le toluène, le dodécane, l'undécane, le décane, le nonane, l'octène et les cires de polyéthylène à bas poids moléculaire.

14. Procédé selon la revendication 1, dans lequel la solution contient entre environ 1 et environ 35 % en poids de polyéthylène.

15. Procédé selon la revendication 14, dans lequel la solution contient entre environ 2 et environ 20 % en poids de polyéthylène.

16. Procédé selon l'une quelconque des revendications précédentes, dans lequel ledit étirage se fait après l'extraction du solvant de la solution formée.

17. Procédé selon l'une quelconque des revendications précédentes, dans lequel ledit étirage se fait avant l'extraction du solvant de la solution formée.

18. Procédé selon l'une quelconque des revendications précédentes, dans lequel la solution formée est étirée aussi bien avant qu'après une extraction du solvant de ladite solution formée.

19. Procédé selon l'une quelconque des revendications précédentes, dans lequel l'article formé a été étiré à une longueur égale à au moins cinq fois la longueur originale.
